# EUROPÄISCHE PATENTANMELDUNG

(11) **EP 2 084 973 A1**
(43) Veröffentlichungstag der Anmeldung: **05.08.2009**
(21) Anmeldenummer: 09150256.7
(22) Anmeldetag: 08.01.2009
(51) Int. Cl.: A23L 1/216, A23L 1/2165

(54) **Verfahren zur Herstellung von Kartoffelklößen**

(30) Priorität: 08.01.2008 DE 102008003401
(71) Anmelder: GET - INTERNATIONALE GMBH, 52499 Baesweiler (DE)
(72) Erfinder: Thelen, Alois, 52499, Baesweiler (DE)
(74) Vertreter: von Kreisler Selting Werner

(57) **Zusammenfassung**

Die vorliegende Erfindung betrifft ein Verfahren zur Herstellung von Kartoffelklößen unter Verwendung von Trockenhefe oder Hefe als Backtriebmittel, durch dieses Verfahren hergestellte Klöße sowie Rohmassen, d.h. Kartoffelmassen oder Trockenmassen für solch ein Verfahren.

## Beschreibung

Die vorliegende Erfindung betrifft ein Verfahren zur Herstellung von Kartoffelklößen unter Verwendung von Trockenhefe oder Hefe als Backtriebmittel, durch dieses Verfahren hergestellte Klöße sowie Rohmassen, d.h. Kartoffelmassen oder Trockenmassen für solch ein Verfahren.

Hefeklöße aus Getreidestärke/Mehl sind hinreichend bekannt. Weiterhin ist bekannt, dass alternative Backtriebmittel anstelle der Hefe hierfür eingesetzt werden können. Darüber hinaus werden Backtriebmittel auch zur Herstellung von Klößen, die neben Getreidestärke/Mehl einen bestimmten Anteil an Kartoffeln an der Rohmasse enthalten, eingesetzt (FR 1.535.600). Bei reinen Kartoffelklößen werden üblicherweise keine Backtriebmittel eingesetzt, was zur Folge hat, dass diese recht klebrig sind. In einigen Fertigprodukten wurde deshalb Backpulver zur Auflockerung der Klöße verwendet, der erzielte Effekt ist jedoch nur gering. Auch erwähnt DD-A-266499 die Verwendung von Backtriebmitteln zur Herstellung von Kartoffelklößen.

Andererseits ist das Kochen von reinen Kartoffelklöße sehr zeitaufwendig und erfordert eine deutliche Energiezufuhr, da diese eine längere Kochzeit als die Klöße auf Getreidebasis benötigen. Andererseits neigen solche Kartoffelklöße beim Kochen stark zum Zerfall, so dass ein Verfahren zur Verkürzung des Kochprozesses äußerst wünschenswert ist.

Es wurde nunmehr gefunden, dass reine Kartoffelklöße mit Hilfe von Frischhefe oder Trockenhefe als Backtriebmittel mit deutlich kürzerer Kochzeit und niedrigerer Kochtemperatur hergestellt werden können als herkömmliche Klöße. Die so hergestellten Knödel weisen darüber hinaus Vorteile hinsichtlich ihrer Konsistenz insbesondere ihrer Lockerheit auf, die nach üblichen Verfahren (d.h. ohne Backtriebmittel oder mit Backpulver als Backtriebmittel) hergestellten Kartoffelklöße überlegen machen.

Die vorliegende Erfindung betrifft somit ein Verfahren zur Herstellung von Kartoffelklößen, die im Wesentlichen aus Kartoffeln und Kartoffelstärke bestehen, umfassend das Versetzen der Ausgangskartoffelmasse mit Frischhefe oder Trockenhefe als Backtriebmittel. Weiterhin wird eine Kartoffelmasse oder Kartoffeltrockenmasse für solche Klöße und die durch das Verfahren erhaltenen Knödel zur Verfügung gestellt.

In der vorliegenden Anmeldung werden die Begriffe "Klöße" und "Knödel" synonym verwendet.

Das erfindungsgemäße Verfahre umfasst weiterhin das Formen der Klöße/Knödel und Garen in Wasser bei keiner oder geringer Energiezufuhr.

Die Menge des Backtriebmittels in der Ausgangskartoffelmasse beträgt vorzugsweise 3-5 g Trockenhefe bzw. 8-12 g Frischhefe. Die (Ausgangs-) Kartoffelmasse enthält vorzugsweise wenigstens 90 Gew.% besonders bevorzugt wenigstens 95 Gew.% Kartoffelprodukte, d. h. Kartoffelbrei, -stücke, - pulver und/oder Kartoffelstärke. Die (Ausgangs-)Kartoffelmasse kann weiterhin Gewürze, Geschmacksverstärker, Einlagen (wie Fleisch-, Brot- und Obststücke) usw. enthalten.

Bei der erfindungsgemäßen Kartoffelmasse oder Kartoffeltrockenmasse handelt es sich um ein Fertigprodukt, dass in loser Form, Sackform oder im Beutel vorliegen kann. Sie kann dabei in Klein- oder Großgebinde vorliegen, für private Anwendung und Nutzung im Haushalt sollte sie nicht mehr als 50 Klöße enthalten. Ein Kochhinweis kann als Rezeptvorschlag auf oder in der Verpackung vorhanden sein.

Die vorliegende Erfindung wird anhand der nachfolgenden Beispiele näher erläutert.

### Beispiele:

Es wurden Versuche mit Trockenhefe, Frischhefe und zum Vergleich mit Backpulver und herkömmlichen Knödelmischungen durchgeführt. Die Tests wurden unter folgenden Kriterien von mir durchgeführt. Die Nachfolgenden Versuche werden in dem aufgezeigten Bewertungsrahmen mit der jeweiligen Nummer bewertet und beschrieben.

### Bewertungskriterium I (BWK):

| | | | |
|---|---|---|---|
| 1. | Gewicht | 90 g | typisch |
| 2. | Form | rund | typisch |
| 3. | Aussehen | appetitlich | typisch |
| 4. | Farbe | bräunlich gelb | typisch |

### Bewertungskriterium II (BWK):

1. Zum Kochen benötigte Wassermenge 3,5 I
2. Kochtemperatur (sprudelnd) kochend
3. Zeit zum erneuten aufkochen bedingt der Temperaturschwankung beim Eintauchen der Knödel ins kochende Wasser.
4. Kochzeit herkömmlicher Knödel (Hersteller Botato/Le Gusto)
5. Kochverhalten herkömmlicher Knödel
6. Kochzeit Backpulver Knödel (Hersteller Pfanni/Maggi)
7. Kochverhalten Backpulver Knödel
8. Kochzeit Trockenhefe Knödel
9. Kochverhalten Trockenhefe Knödel
10. Kochzeit Frischhefe Knödel
11. Kochverhalten Frischhefe Knödel

### Bewertungskriterium III (BWK):

| | | | |
|---|---|---|---|
| 1. | Geruch | Kartoffelknödel | typisch |
| 2. | Textur | Elastisch, nicht kleistrig, auch klebend | |
| 3. | Geschmack | kartoffelartig | typisch |
| 4. | Lockerheit | Auflockerung herkömmlicher Knödelmischung Botato | |
| 5. | Lockerheit | Auflockerung durch Verquellung der Stärke mit Backpulver | |
| 6. | Lockerheit | Auflockerung durch Verquellung der Stärke mit Trockenhefe | |
| 7. | Lockerheit | Auflockerung durch Verquellung der Stärke mit Frischhefe | |
| 8. | Verzehrfähigkeit | | |
| 9. | Mundgefühl | | |

### Beispiel 1 (Vergleichsbeispiel)

Botato Fertigknödelmischung wurde nach Herstellerangabe angeteigt.
1. Packungsinhalt wurde in ¾ I kaltes Wasser eingerührt und 10 Minuten quellengelassen.
2. Aus der Kartoffelknödelmasse wurden 11 Stücke à 90 g abgewogen und mit der Hand zu Knödeln geformt.
3. 3,5 I Wasser wurden für den Kochprozess zum Kochen gebracht.
4. Die Knödel wurden unter Beibehaltung der Temperatur (E-Herd Stufe 6) ins kochende Wasser gegeben, beim Eintauchen der Knödel sank die Temperatur ab und musste erneut zum Kochen gebracht werden. Dieser Vorgang dauerte ca. 5 Minuten.
5. Nach erneutem Aufkochen wurde die Temperatur auf Stufe 2 herabgesetzt.
6. Nun wurden die Knödel laut der Hersteller Angabe unter leichtem Köcheln (E-Herd Stufe 2) für 20 Minuten fertiggegart. Eine erste Probe ergab das die Knödel noch nicht verzehrfertig waren. Eine zweite Probe erfolgte 6 Minuten später, nun waren die Knödel fertiggegart und verzehrfähig.

BWK I: 1, 2, 3, 4
BWK II: 1, 2, 3
   Erneute Aufkochzeit 5 Minuten, 4 nach dem erneuten Aufkochen wurde die Temperatur herabgesetzt. Die gesamte Kochzeit betrug 26 min bei reduzierter Hitzezufuhr (E-Herd Stufe 2,5). Bedingt der sofortigen Verkleisterung der Stärke ist das Kochverhalten als schwerfällig zu betrachten, da die Hitzeeinwirkung erheblich behindert wird, und deshalb der Zeitpunkt des Auftauchens (freischwimmendes Verhalten der Knödel) verhältnismäßig lange dauert.
BWK III: 1, 2 leicht ziehend elastisch, 3, 4 leichter Abbiss aber fest, 8, 9 Mundgefühl als wenn man in ein Sauerteigbrot beißt.

### Beispiel 2 (Vergleichsbeispiel)

Pfanni^{®} Fertigknödelmischung mit (Backpulver Angabe) wurde nach Herstellerangabe angeteigt.
1. Packungsinhalt wurde in ¾ I kaltes Wasser eingerührt und 10 Minuten quellen gelassen.
2. Aus der Kartoffelknödelmasse wurden 11 Stücke à 90 g abgewogen und mit der Hand zu Knödeln geformt.
3. 3,5 I Wasser wurden für den Kochprozess zum Kochen gebracht.
4. Die Knödel wurden unter Beibehaltung der Temperatur (E-Herd Stufe 6) ins kochende Wasser gegeben. Beim Eintauchen der Knödel sank die Temperatur ab und musste erneut zum Kochen gebracht werden. Dauer zum Neuaufkochen 5 Minuten.
5. Nach erneutem Aufkochen wurde die Temperatur (E-Herd) auf Stufe 2 herabgesetzt.
6. Nun wurden die Knödel laut der Hersteller Angabe unter leichtem Köcheln (E-Herd Stufe 2) für 20 Minuten fertiggegart. Eine erste Probe ergab, dass die Knödel servierfähig waren.

BWK I: 1, 2, 3, 4
BWK II: 1, 2, 3 erneute Aufkochzeit 5 Minuten, 4 nach dem erneuten Aufkochen wurde die Temperatur auf Stufe 2 (E-Herd) herabgesetzt. 5 bedingt durch die Zugabe des Backpulvers und das damit zusammenhängende Verquellen der Stärke sowie auch der Verkleisterung Zeitpunkt, wenn man die Knödel ins kochende Wasser gibt, ist das Kochverhalten als positiv zu bezeichnen, früher Zeitpunkt des Auftauchens der Knödel (freischwimmendes Verhalten).
BWK III: 1, 2, 3, 4 Durch Zugabe des Backpulvers etwas lockerer als die Knödel ohne Backpulver, 8, 9 Mundgefühl vollmundig.

### Beispiel 3

Botato Fertigknödelpulver wurde von mit Trockenhefe vermischt und nach Herstellerangabe angeteigt.
1. Packungsinhalt wurde mit ca. 3,5-4 g Trockenhefe gemischt und in ¾ I kaltes Wasser eingerührt und 10 Minuten quellengelassen.
2. Aus der Kartoffelknödelmasse wurden 11 Stücke à 90 g abgewogen und mit der Hand zu Knödeln geformt.
3. 3,5 I Wasser wurden für den Kochprozess zum Kochen gebracht.
4. Die Knödel wurden unter Beibehaltung der Temperatur (E-Herd Stufe 6) ins kochende Wasser gegeben. Beim Eintauchen der Knödel sank die Temperatur ab und musste erneut zum Kochen gebracht werden. Dieser Vorgang dauerte 5 Minuten.
5. Nach erneutem Aufkochen wurde die Hitzezufuhr sofort auf 0 gestellt.
6. Im geschlossenen Topf wurden nur unter Verwendung der Restwärme die Knödel innerhalb von 15 Minuten fertiggegart.

Ergebnis: Das schnellere Koch- und Garverfahren führt zu enormer Energieeinsparung.
BWK I: 1, 2, 3, 4
BWK II: 1, 2, 3 erneute Aufkochzeit 5 Minuten, 4 Nach dem erneuten Aufkochen wurde die Temperatur sofort auf Stufe 0 herabgesetzt. 5 bedingt durch die Zugabe der Trockenhefe wurde eine bessere Verquellung der Stärke und Auflockerung der noch nicht gekochten Knödel erreicht, was dazu führt, dass der Verkleisterungszeitpunkt beim Eintauchen der Knödel zwar der gleiche ist, wie bei den anderen Versuchen aber der entscheidende Punkt ist, dass die eindringende Hitze nicht mehr behindert ist, um den eigentlichen Kochprozess (Gare) durch zuführen, durch die sofortige Hitzedurchflutung beim Eintauchen der Knödel ins kochende Wasser ist es erstmals möglich die Temperatur auf Null herabzusetzen, um so die beschriebene Energieeinsparung zu erreichen. Das Kochverhalten ist als positiv zu bewerten durch das früher erzielte und gewünschte Auftauchen der Knödel (freischwimmendes Verhalten) ist es nun unter Ausnutzung der Restwärme möglich die Knödel schneller und lockerer fertig zu garen.
BWK III: 1, 2, 3, 4 Durch die Zugabe der Trockenhefe sind die Knödel lockerer als die mit Backpulver, 8, 9 Mundgefühl vollmundig.

### Beispiel 4

Analog Beispiel 3 wurde 10 g Frischhefe anstelle der Trockenhefe verwendet. Beim Geruch ist der für Hefe typische Geruch sofort verflogen. Geschmacklich sind keine Beeinträchtigungen festgestellt worden. Die Lockerheit und das Mundgefühl ist vergleichbar mit den Knödeln des Beispiels 3.

## Patentansprüche

1. Verfahren zur Herstellung von Kartoffelklößen, die im Wesentlichen aus Kartoffeln und Kartoffelstärke bestehen, umfassend das Versetzen der (Ausgangs-)kartoffelmasse mit Frischhefe oder Trockenhefe als Backtriebmittel.

2. Verfahren nach Anspruch 1, wobei das Backtreibmittel in einer Menge von 3-5 g (Trockenhefe) oder 8-12 g (Hefe) per kg Ausgangskartoffelmasse eingesetzt wird.

3. Verfahren nach Anspruch 1 oder 2, wobei die Ausgangskartoffelmasse wenigstens 90 Gew.% , vorzugsweise wenigstens 95 Gew.% Kartoffelprodukte, insbesondere Kartoffelbrei und Kartoffelstärke enthält.

4. Verfahren nach einem der Ansprüche 1 bis 2, wobei die Kartoffelmasse weiterhin Gewürze, Geschmacksverstärker, Einlagen usw. enthält.

5. Verfahren nach einem oder mehreren der Ansprüche 1 bis 3, weiterhin umfassend Formen von Klößen und Garen der Klöße bei keiner oder geringer Energiezufuhr.

6. Kartoffelklöße erhältlich durch das Verfahren gemäß einem oder mehreren der Ansprüche 1 bis 5.

7. Kartoffelmasse oder Kartoffel-Trockenmasse derselben enthaltend ein Backtriebmittel wie in Ansprüchen 1 bis 4 definiert.

8. Kartoffelmasse oder Kartoffel-Trockenmasse nach Anspruch 7, die in loser Form, Sackform oder Beutel vorliegt.
